(19) Europäisches Patentamt / European Patent Office / Office européen des brevets

(11) **EP 4 459 234 A1**

(12) **EUROPEAN PATENT APPLICATION**

(43) Date of publication:
**06.11.2024 Bulletin 2024/45**

(21) Application number: **23171757.0**

(22) Date of filing: **05.05.2023**

(51) International Patent Classification (IPC):
**G01D 3/08** (2006.01)    **G01D 5/14** (2006.01)

(52) Cooperative Patent Classification (CPC):
**G01D 5/145; G01D 3/08**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Siemens Gamesa Renewable Energy
A/S**
**7330 Brande (DK)**

(72) Inventors:
• **Freire, Nuno Miguel Amaral**
**7330 Brande (DK)**

• **Godridge, Paul**
**Cheadle, SK8 7HX (GB)**
• **Szczesny, Ireneusz Grzegorz**
**7160 Tørring (DK)**
• **Wu, Zhan-Yuan**
**Sheffield, S10 4BB (GB)**

(74) Representative: **SGRE-Association
Siemens Energy Global GmbH & Co. KG
SE I IM P Intellectual Property
Siemenspromenade 9
91058 Erlangen (DE)**

(54) **DETERMINING ROTOR ELECTRICAL ANGLE POSITION OF A WIND TURBINE GENERATOR**

(57)    It is described a method of determining a rotor electrical angle position (17) of an electrical generator (1a) comprising a stator (2) and a rotor (3) with plural mounted permanent magnets (4), in particular of a wind turbine, the method comprising: allowing to receive and/or receiving at least a time dependent measurement signals (9a,b) from a first analogue Hall sensor (10a) and a second analogue Hall sensor (10b), and optionally a third analogue Hall sensor (10c), the Halls sensors being mounted at different circumferential positions at the stator (2) to detect magnetic flux at least partly due to one or more of the permanent magnets; evaluating received measurement signals (9a,b,c); selecting at least one measurement signal based on the evaluation, in order to in particular exclude a measurement signal of any faulty sensor; determining the electrical angle position (17a, 17) based on the at least one selected measurement signal.

FIG 1

EP 4 459 234 A1

## Description

Field of invention

The present invention relates to a method and a corresponding arrangement of determining a rotor electrical angle position of an electrical generator comprising a stator and a rotor with plural mounted permanent magnets, in particular of a wind turbine. The present invention further relates to a method of controlling a permanent magnet generator wherein the control is based on the determined rotor electrical angle position. Furthermore, the present invention relates to an electrical generator system comprising equipment for determining the rotor electrical angle position.

Art Background

For a conventional permanent magnet synchronous machine rotor position feedback (generator electrical angle) may be required for control of the generator. Conventionally various position feedback techniques may be employed. For example, during normal power production of the generator when the generator rotates above a certain speed, an EMF (electromotoric force) observer may be utilized to estimate the rotor position. At starting the electrical machine without the assistance from the blade aerodynamic torque, the rotor position may be estimated using a high frequency injection (HFI) observer, which is then used for generator torque production. In some specific applications where high dynamic in position feedback is required, an encoder may also be utilized.

Each of the above-mentioned techniques and methods have their own advantages and disadvantages and conventionally a single technique may not be capable to fulfil all control requirements under all circumstances. Often conventionally multiple of the above-mentioned techniques may be provided and thereby the system may become very complex in terms of required components and configurations.

Conventional turbine applications may include to utilize the rotor position for generating electrical energy in normal power production mode, for motoring for rotor positioning for a speed control and/or torque production, etc.

A conventional EMF observer may rely on the calculation of machine back EMF (electromotive force) and may conventionally be applied when the rotor speed is above a certain speed level. Conventionally, the EMF observer may be used during normal power production mode. However, at zero or low rotational speed, this method may not be suitable.

By applying voltage or injecting current at a high frequency (typically a few 100 Hertz) and measuring the responses in current and/or voltage, the machine electrical position may also be estimated by the so-called HFI observer. The HFI (high frequency injection) observer may be utilized at zero or low rotational speeds, for example for the purpose of motoring and rotor positioning. As this method is potentially intrusive to the drive system (due to the required injection of high frequency current and/or voltage), it cannot be applied continuously and may interfere with particular operations. Further this method may be difficult for machines with non or low saliency.

A conventional encoder may also be installed at the rotating centre of the generator or on the outer side (for example on a brake disc). The encoder has been observed to provide an unacceptable error in the electrical angle especially when the generator diameter is relatively large in size and the pole number is also large in size. Further, the encoder installed on the outer side would only be suitable for low speed operation.

Thus there may be a need for a method and a corresponding arrangement of determining a rotor electrical angle position of an electrical generator, providing more reliable results and being capable to provide an accurate and reliable rotor position in different operational mode, particular in different rotational speeds of the rotor, in particular in a low speed, in a high speed, and in a nominal speed.

Summary of the Invention

This need may be met by the subject matter according to the independent claims. Advantageous embodiments of the present invention are described by the dependent claims.

According to an embodiment of the present invention it is provided a method of determining a rotor electrical angle position of an electrical generator comprising a stator and a rotor with plural mounted permanent magnets, in particular of a wind turbine, the method comprising: allowing to receive and/or receiving at least a time dependent measurement signal from a first analogue Hall sensor and a time dependent measurement signal from a second analogue Hall sensor, the Halls sensors being mounted at different circumferential positions at the stator to detect magnetic flux at least partly due to one or more of the permanent magnets; evaluating received measurement signals; selecting at least one measurement signal based on the evaluation, in order to in particular exclude a measurement signal of any faulty sensor; determining the electrical angle position based on (a combination of a calculation including) the at least one selected measurement signal.

The method may be implemented in software and/or hardware. The method may be performed by an arrangement of determining a rotor electrical angle position according to an embodiment of the present invention.

The rotor electrical angle position $\theta\_e$ may be different from a mechanical angle position $\theta\_m$, but may be related by a mathematical formula of the mechanical angle position, by the machine magnet pole-pair number,

$p_p$ and possible angle offset, $\theta_{en}$, i.e., $\theta_e = p_p\theta_m + \theta_{en}$). The mechanical angle position of the rotor may correspond or be equal to the azimuthal angle position of the rotor.

The rotor electrical angle position may be utilized for vector control of the generator, which may involve transformation into and out of a dq-coordinate frame which rotates synchronously with the rotor. In the dq-frame electrical quantities will be substantially DC quantities.

The stator may comprise one or more stator segments forming a whole circumference. Each of the one or more stator segments may comprise a multiphase winding set which is wound around or arranged within teeth of the respective stator segment.

The generator may be a synchronous permanent magnet generator. When the generator is a generator of a wind turbine, a main shaft at which plural rotor blades are mounted can mechanically be connected with the generator rotor, optionally via a gearbox.

Each of the analogue Hall sensors may be capable of detecting a magnetic field or magnetic flux which is at least partly generated or created by one of the permanent magnets mounted at the rotor. The Hall sensors may employ the so-called Hall-effect for detecting the magnet field or magnetic flux. Each of the Hall sensors may continuously provide, in a non-faulty state, a respective measurement signal. Thereby, each of the measurement signals from the different one or more Hall sensors may be an analogue signal and may contain a time course of magnetic flux or magnetic field related values detected by the respective sensor. The measurement signal may for example comprise an electrical signal. The Hall sensors may for example be mounted at or within one or more air ducts provided in the stator.

In case of a faulty sensor a measurement signal may not be received or incorrect. If this is the case, the respective Hall sensor may be identified or detected to be a faulty sensor. Embodiments of the present invention may detect or identify, at what time instance one or more of the installed Hall sensors becomes or is faulty. Thus, the method may monitor continuously, whether one or more of the Hall sensors is or are faulty. Based on the dynamic monitoring the selection of measurement signals for determination of the rotor angle position may dynamically be updated.

Evaluating the received measurement signals (under normal conditions of functional sensors, measurement signals from all installed sensors may be received) may involve to digitize and/or analyze the respective time course defined by the measurement signals. The measurement signals may for example be evaluated in order to detect any unexpected behaviour or irregularity. Thereby, the measurement signals may either individually be analyzed or assessed or may be assessed in combination, for example a binary sum signal be evaluated, wherein to each bit a sensor is associated and this bit set by the individual sensor state. Further, the measurement signals may be evaluated including to form one or more groups comprising measurement signals from different combinations of sensors. The evaluation may be based on the digitized and/or the analogue measurement signals.

Selecting the at least one measurement signal may for example identify one or more non-faulty (e.g. healthy) sensors, whose measurement signals do not exhibit any irregularity or any unexpected behaviour (for example with respect to a considered time course). At least one measurement signal may be selected but preferably at least two measurement signals may be selected or in other embodiments even three measurement signals of three non-faulty (i.e. functional) sensors may be selected. The higher the number of selected measurement signals, the more fault tolerant the rotor position determination may be.

Determining the electrical angle position based on the at least one selected measurement signal may involve to perform a calculation according to one or more mathematical equations. The equation may also be implemented in a method or may be implemented in an electrical circuit or electrical evaluation module. Thus, an analogue and/or digital implementation of the determination step and also one or more of the other steps of the method may be provided.

The evaluation of the measurement signals may for example comprise a fault detection and a selection based on the evaluation of measurement signals. The determination of the electrical angle position may be implemented in a closed-loop or in an open-loop variant. The open-loop method may be simple but may be exposed to noises in the input signals. The closed-loop method may use a phase-locked loop (PLL) or a synchronous frequency extractor (SFE). A low pass filter may be integrated to minimize the effects from noise.

It is noted that the at least two Hall sensors, in particular three Hall sensors, are not required to be mounted at particular relative circumferential positions in the stator. The relative positions may in particular be different from 120 degrees offset or 90 degrees offset. Thereby, flexible sensor installation is enabled, simplifying the method and installation efforts.

Thereby, embodiments of the present invention may provide a simple solution in terms of sensor installation, signal processing for angle calculation and allow also detection of fault and thus allow fault tolerant operation. Different from methods like EMF observer and/or HFI observer, embodiments of the present invention may be capable of supporting a large number of required applications and operational conditions and may provide improved accuracy and reliability in all rotational speed ranges. Thus, it may not be required any more to provide or install different types of sensors or employ one or more observer techniques, EMF, HFI.

According to an embodiment of the present invention, evaluating received measurement signals comprises: for each sensor, digitizing the received measurement signal, in order to derive a time dependent individual state pattern, in particular binary state pattern; evaluating the digitized measurement signals, in particular in a combined manner, in order to select at least one non-faulty sensor and/or deselect at least one faulty sensor.

The time-dependent individual state pattern derived from the digitized received measurement signal may for example define two or more different states depending e.g. on the negative or positive sign of the analogue measurement signals in the considered time course or time interval. The time-dependent individual state may for example, in case of a binary state comprise the definitions of a state zero and a state one for plural time instances. The state one may for example be assigned, whenever the analogue measurement signal is above zero and the state zero may be assigned if the analogue signal is below zero. Other assignments may be possible. For example a functional sensor is expected to provide a measurement signal whose state varies in a substantially periodic manner at least across a not too extensive timespan. The faulty sensors may for example provide a measurement signal corresponding, after a particular point in time, to either only the state one or the state zero, representing a faulty state pattern at a change in other sensor measurement states. Thus, evaluating the digitized measurement signals may involve detecting an unexpected individual and/or combined state pattern.

Any sensor which provides a measurement signal whose digitized signal makes the combined state pattern irregular or unexpected may be de-selected. Thereby, an effective fault detection may be provided.

According to an embodiment of the present invention evaluating the digitized measurement signals comprises: combining two or more of the individual state patterns, to create one combined state pattern associated with the corresponding group of sensors; for the combined state pattern: evaluating the combined state pattern to detect a time instance beyond which an irregularity or unexpected behaviour occurs; indicating a fault; wherein an irregularity is in particular detected, if at least one of the following holds: a deviation of the combined state pattern from an expected state pattern is present or exceeds a threshold; a temporal unexpected change of the state pattern is present or exceeds a threshold.

The digitized measurement signals from all sensors may be formed (combined) in order to create the combined state pattern. For example, if the individual sensor states are 1, 0 and 1, the formed (combined) state would be 101. Plural combined states form a combined state pattern. In other embodiments, less than all measurement signals from all sensors are combined in order to create a combined state patterns being associated with a particular group of measurement sensors. For each group of sensors an expected state pattern may be expected and this predicted expected combined state pattern may be compared with the actually arrived combined state pattern of this group of measurement sensors. An irregularity may also be detected if a temporal change of the (combined) state pattern is present or exceeds a threshold or is unexpected without actually comparing it or deriving a difference with an expected (combined) state pattern. Thereby, plural different options are provided in order to detect a faulty sensor.

According to an embodiment of the present invention, evaluating the combined state pattern comprises: comparing the combined state pattern with a predetermined reference state pattern for a functional set of sensors to determine a deviation; detecting a fault depending on the deviation; and/or switching the selection based on the fault detection.

The reference state pattern in particular reference combined state pattern may for example be predetermined based on the installation location(s) of the sensor(s) or in particular a relative angle offset of the installation locations of the considered sensors. The method may for example involve to evaluate the combined state pattern to detect which one of the sensor is faulty or in order to detect that all sensors are healthy and functional. Any of the faulty sensors may be de-selected in the selection step.

In general, the selection may involve either to positively select any of the functional or healthy sensors or de-select any of the non-functional or faulty sensors. Thus, the selection may be defined by a de-selection of particular sensors.

According to an embodiment of the present invention, a considered sensor is identified as faulty, if the combined state pattern associated with a group of sensors containing the considered sensor exhibit an irregularity, wherein the measurement signal of the faulty sensor is deselected.

Thereby, a reliable identification of a faulty sensor may be provided.

Some of the above described embodiments utilize or employ digitized measurement signals and evaluate or analyze the digitized measurement signals. In other embodiments, analogue measurement signals may be analyzed or assessed either individually or in combination with assessment or analysis of digitized measurement signals according to embodiments of the present invention.

According to an embodiment of the present invention, evaluating the analogue measurement signals comprises: forming several measurement signal groups each containing one or more measurement signals originating from one or more sensors; for each measurement signal group, determining the rotor position and/or rate of change of the rotor position using the one or more measurement signals, as group rotor position and/or as group rotor speed; assessing group rotor positions and/or as group rotor speeds for at least one irregularity and/or unexpected behaviour, in order to select at least one measurement signal associated with at least one sensor; determining rotor position and/or rate of change of the rotor position based on the selected at least one measurement signal.

The rotor position and/or rate of change of the rotor position may be determined using one, two, or three measurement signals. The rate of change of the rotor position may be derived based on the rotor position by performing a differential quotient or derivative with respect to time. For any functional sensors, the derived rate of change of rotor position (being equivalent to the rotor speed) is expected to vary only to a slow amount. Thus abrupt changes of the rotor speed are not expected. When however, a rapid change of the rate of change of the rotor position is derived considering a group of measurement signals, they indicate that one of the sensors which are comprised in the group which results in the combined measurement signals, is faulty. The affected sensor may be identified by assessing several measurement signal groups and their associated rotor position and/or rotor speed or rate of change of the rotor speed.

According to an embodiment of the present invention, wherein evaluating the analogue measurement signals comprises: mutually comparing a time course of several group rotor positions and/or group rotor speeds; deselecting those one or more sensors for which in each associated group an irregularity and/or unexpected behaviour is observed (which may e.g. be either an unexpected rate of speed in the calculated rotor speed, or an unexpected change in state pattern formed from digitized measurement signals); determining rotor position and/or rate of change of the rotor position based on the non-deselected at least one measurement signal.

Thereby, a reliable identification of faulty sensor(s) may be provided. The evaluation of the measurement signal may for example comprise to inspect/examine the time course with regard to at least one irregularity, in particular comprising change of oscillation characteristic, measurement signal missing or faulty or amplitude below a threshold. Other criteria may be applied.

According to an embodiment of the present invention, the method comprises upon detection of the fault in one sensor: dynamically switching the selected one or more measurement signal, to not include the faulty sensor measurement signal; determining the rotor position based on the switched selected one or more measurement signal.

Thereby, dynamic monitoring may be provided enabling smooth continuation of operation of the generator in case of a potential fault in one or more sensors.

According to an embodiment of the present invention, three sensors are installed, wherein zero or one or two sensors are or become faulty, or wherein two sensors are installed, wherein zero or one sensor is or become faulty, wherein the Hall sensors are mounted at the stator at arbitrary different circumferential positions, in particular spaced apart by electrical angle different from substantially 90° or 120°.

In other embodiments still more sensors may be installed. The sensors may be installed having known or derivable circumferential angle offset. The known offset may for example be utilized for deriving expected state patterns or expected relative measurement signals of the sensors.

According to an embodiment of the present invention, determining the electrical angle position comprises: determining orthogonal signals from selected measurement signals of two or three or more sensors, in particular utilizing an angle offset of mounting sites of the two sensors; determining the electrical angle position from the two orthogonal signals.

The orthogonal signals may be signals corresponding to hypothetical sensors which are installed having an electrical angle offset of 90°. The orthogonal signals may be determined using a mathematical equation implementing this equation in an electronic circuit or computer code. Determining the orthogonal signals may advantageously enable to determine the electrical angle position from a conventionally known equation.

According to an embodiment of the present invention, at least one of the following holds: determining the electrical angle position comprises normalizing selected measurement signals; determining the electrical angle position using employing open loop or closed loop; determining the electrical angle position comprises to determine and to add an angle offset, in particular based on stator segment type and/or stator tooth used for mounting the sensor and/or mounting location and/or sensor location within air duct.

Normalizing the selected measurement signals may involve to subtract the mean from the respective measurement signals as determined across a particular time span, and dividing the result by the amplitude in order to result in a signal which oscillates around zero and has amplitude 1. Open loop and closed loop evaluation or determination may be performed in a conventionally known manner.

The angle offset may be required to be determined, since the sensors are not necessarily installed at a "zero" position. According to an embodiment of the present invention, the angle offset may be predicted based on the machine design and sensor location. Thereby, the final angle may be calculated as the sum of the rotor position as determined based on the measurement signals and the angle offset. The offset may be predicted by adjustments for 1) selection of stator segment type, 2) stator tooth for sensor mounting, 3) air duct location for skewing effect, and 4) sensor location inside an air duct (for example left end or right end). The offset may be then calculated as the sum of several individual offset values.

The sensors may be installed in an air duct of a stator segment tooth. The three sensors or the two sensors may be installed at an arbitrary phase shift as long as the phase shift is not zero. Therefore the selection of the location for the sensor installation may be flexible, to minimize the restriction or to ease the production.

According to an embodiment of the present invention, it is provided a method of controlling a permanent magnet generator comprising a stator and a rotor with plural mounted permanent magnets, in particular of a wind turbine, comprising: performing a method of determining a rotor electrical angle position of an electrical generator according to one of the preceding embodiments; controlling the permanent magnet generator based on the determined rotor electrical angle position.

The control method may perform vector control which requires the rotor electrical angle position as input. The method may for example be executed or performed by a wind turbine controller or a controller of the electrical generator.

According to an embodiment of the present invention, the method is performed during at least one of: during starting; during normal operation at partial or full load for producing electrical power; during standstill; during maintenance involving rotor movement.

The method may be applied to substantially all operational modes of a typical electrical machine or in particular a typical wind turbine generator.

It should be understood that features, individually or in any combination, disclosed, described or explained or employed for a method of determining a rotor electrical angle position are, individually or in any combination, also applicable to an arrangement for determining a rotor electrical angle position according to embodiments of the present invention and vice versa.

According to an embodiment of the present invention, it is provided an arrangement for determining a rotor electrical angle position of an electrical generator comprising a stator and a rotor with plural mounted permanent magnets, in particular of a wind turbine, the arrangement comprising: an input portion adapted to allow to receive and/or receive time dependent measurement signals from a first and a second analogue Hall sensor mounted at different circumferential positions at the stator to detect magnetic flux at least partly due to one or more of the permanent magnets; a processor coupled to the input portion and adapted: to evaluate received measurement signals; to select at least one measurement signal based on the evaluation, in order to exclude a measurement signal of any faulty sensor; to determine the electrical angle position based on the at least one selected measurement signal, the arrangement in particular being further adapted to control the permanent magnet generator based on the determined rotor electrical angle position; the arrangement in particular comprising the first and the second Hall sensor.

The arrangement may for example be a module of a wind turbine controller.

According to an embodiment of the present invention, it is provided an electrical generator system, in particular of a wind turbine, comprising: a generator including a stator and a rotor with plural mounted permanent magnets; an arrangement according to the preceding embodiment, connected to control the generator.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

Brief Description of the Drawings

Fig. 1 schematically illustrates an electrical machine including an arrangement for determining a rotor electrical angle position in a schematic manner according to an embodiment of the present invention;

Fig. 2 schematically illustrates a functional diagram of a method for angle calculation as employed according to embodiments of the present invention;

Fig. 3 schematically illustrates a stator with installed Hall sensors as employed according to embodiments of the present invention;

Figs. 4 and 5 illustrate curves representing measurement signals of Hall sensors including potential evaluation curves or patterns;

Figs. 6 to 11 illustrate measurement signals from Hall sensors and corresponding evaluation steps as performed according to embodiments of the present invention;

Figs. 12 and 13 illustrate analogue measurement signals and potential evaluation methods as employed according to embodiments of the present invention; and

Figs. 14, 15, 16 illustrate results of rotor position determinations compared to a reference angle.

Detailed Description

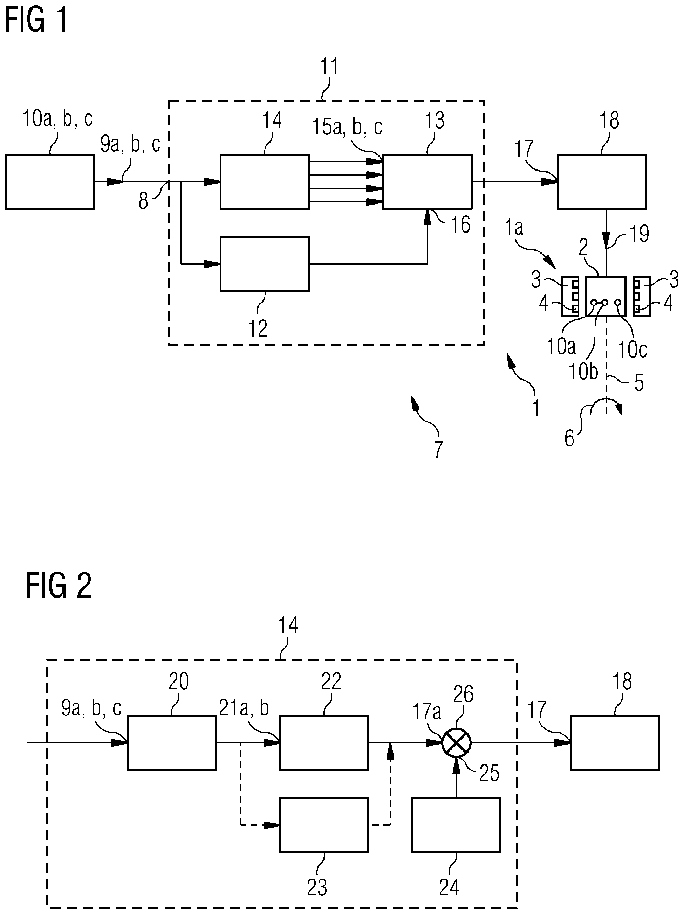

The electrical generator system 1 schematically illustrated in **Fig. 1** as a functional diagram comprises a stator 2 and a rotor 3 (together forming a generator 1a) which is rotatably supported with respect to the stator 2 and comprises plural permanent magnets 4. The rotor is configured to rotate about the rotation axis 5 around the stator 2. Thereby, the rotor position is defined by an electrical rotor position 6 ($\vartheta$) designating or representing the electrical position of the rotor 3.

The electrical generator 1a further comprises an arrangement 7 for determining a rotor electrical angle position 6 ($\vartheta$) of the electrical generator 1 according to an embodiment of the present invention. The arrangement 7 comprises an input section 8 adapted to allow receiving and/or to receive time-dependent measurement signals 9a,b,c from a first and a second analogue Hall sensor individually labelled with reference signs 10a, b,c. The measurement signals from the different Hall sensors 10a, 10b, 10c are denoted as 9a, 9b, 9c.

Thereby, the first and the second and third analogue Hall sensors 10a, 10b, 10c are mounted at different circumferential positions at the stator 2 to detect magnetic flux at least partly due to one or more of the permanent magnets 4.

The arrangement 7 further comprises a processor 11 which is coupled to the input portion 8 and adapted to evaluate received measurement signals, in particular in a fault detection module 12, to select at least one measurement signal based on the evaluation and in particular in a selection module 13, in order to exclude a measurement signal of any faulty sensor. The processor 11 is further configured to determine the electrical angle position, in particular using an angle calculation module 14, based on the at least one selected measurement signal.

In the illustrated embodiment, the angle determination module 14 determines plural rotor angle positions 15a, 15b, 15c, 15d based on plural different combinations of received measurement signals 9a, 9b and 9c. The fault detection module 12 provides as input for the selection module 13 information 16 regarding any potential faulty sensor or information regarding the healthy or functional sensors. Based on the information 16 regarding healthy or faulty sensors, the selection module 13 selects one of the determined plural rotor angle positions 15a, 15b, 15c, 15d in order to arrive at the final machine rotor position angle 17 (e.g. also considering an angle offset). The final rotor position 17 is supplied to a machine control module 18. The machine control module 18 based on the angle 17 supplies control signals 19 to the electrical generator 1a including the stator 2 and the rotor 3 and optionally a converter.

The arrangement 7 allows a fault-tolerant operation of the electrical generator system 1. The sensors 10a, 10b, 10c or potentially more sensors may be reconfigured dynamically, that is, if a sensor failure is detected, it will be taken out from use and the other two or more sensors will be used for continuous control of the electrical machine in an almost seamless fail-safe approach. In this sense, the arrangement 7 provides a fault-tolerant scheme with a use of analogue Hall sensors for machine control.

In the angle calculation module 14, a few parallel processing may be scheduled by using for example all three measurement signals 9a, 9b, 9c from the sensors 10a, 10b, 10c.

The angle calculation may in other embodiments use threes signals (of sensors offset by 120°) in order to derive αβ-signals used for angle calculation. Thereby, the αβ-signals represent orthogonal signals which may for example be derived according to the following formula.

In case that the three Hall sensors are 120° circumferentially offset the set installed in the stator, the orthogonal signals can be derived as follows:

$$\begin{cases} S_\alpha = \frac{2}{3}[S_a - (S_b - S_c)\cos\left(\frac{\pi}{3}\right)] \\ S_\beta = \frac{2}{3}[(S_b - S_c)\sin\left(\frac{\pi}{3}\right)] \end{cases}$$

The angle calculation may in other embodiments use two signals (of sensors offset by 120°) in order to derive αβ-signals used for angle calculation. When for example only two sensors A and B are used, the the orthogonal signals (αβ-signals) may be calculated as follows:

$$\begin{cases} S_\alpha = S_A \\ S_\beta = \frac{2}{\sqrt{3}}S_B - \frac{1}{\sqrt{3}}S_A \end{cases}$$

**Fig.** 2 schematically illustrates as a functional diagram or scheme of one implementation of the angle calculation module 14 illustrated in Fig. 1. A mapping or transformation to αβ module labelled with reference sign 20 receives the measurement signals 9a, 9b, 9c. From two or three of those signals the mapping or transformation modules determines the orthogonal measurement signals Sα, Sβ as explained above. The orthogonal signals 21a, 21b (alternatively labelled or represented as Sα, Sβ) are supplied either to an open loop method 22 or to a closed loop method 23. These modules 22, 23 are capable of determining the (raw or preliminary) rotor position, denoted as with reference sign 17a. An angle offset determination module 24 determines an angle offset 25 for example based on the configuration of the machine and in particular installation locations of the Hall sensors 10a, 10b, 10c. The angle offset 25 is added to the output of the modules 22 or 23, i.e. the raw rotor position 17a. The result of the addition using the addition element 26 is the final rotor position 17 which is supplied to the machine control 18.

Once two orthogonal signals are derived as above, the angle can be calculated by borrowing the existing techniques of open-loop calculation or PLL closed-loop calculation as illustrated in Fig. 2. The raw rotor electrical angle 17a can for example calculate according to the following equation:

$$\theta = \tan^{-1}\left(\frac{S_\beta}{S_\alpha}\right)$$

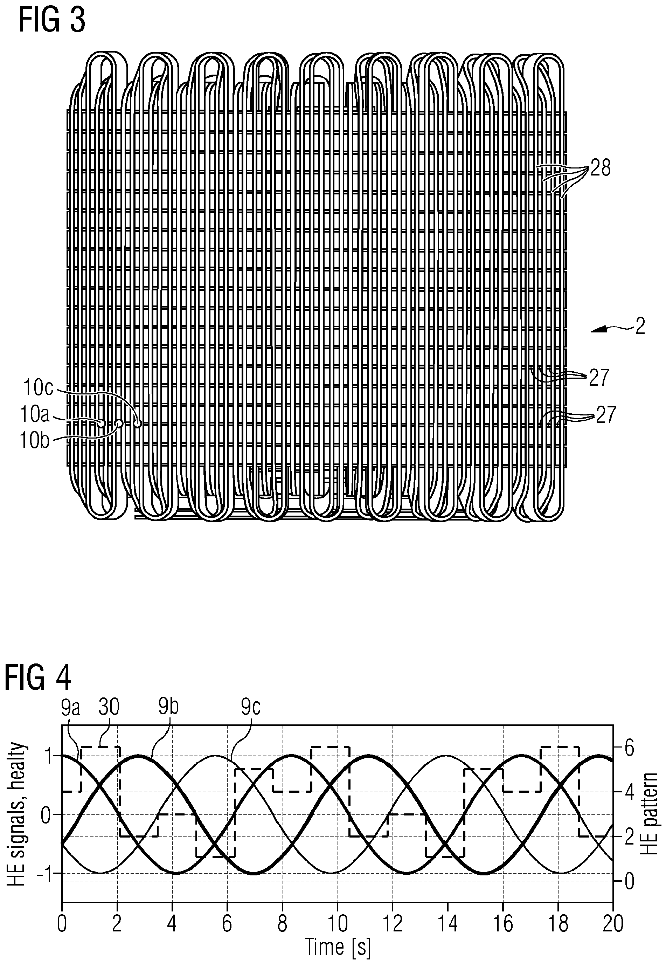

**Fig.** 3 illustrates in a schematic manner a part of stator 2 of an electrical machine according to an embodiment of the present invention comprising air ducts 27 and winding sets 28. Furthermore, the stator 2 is equipped with three Hall sensors 10a, 10b, 10c. These Hall sensors 10a, 10b, 10c are installed with an electrical angle offset (also referred to as δ) which can be 120°, or 90° or a value different from 90° and also different from 120° in electrical phase angle. The Hall sensors 10a, 10b, 10c are suitable for being employed according to embodiments of the present invention.

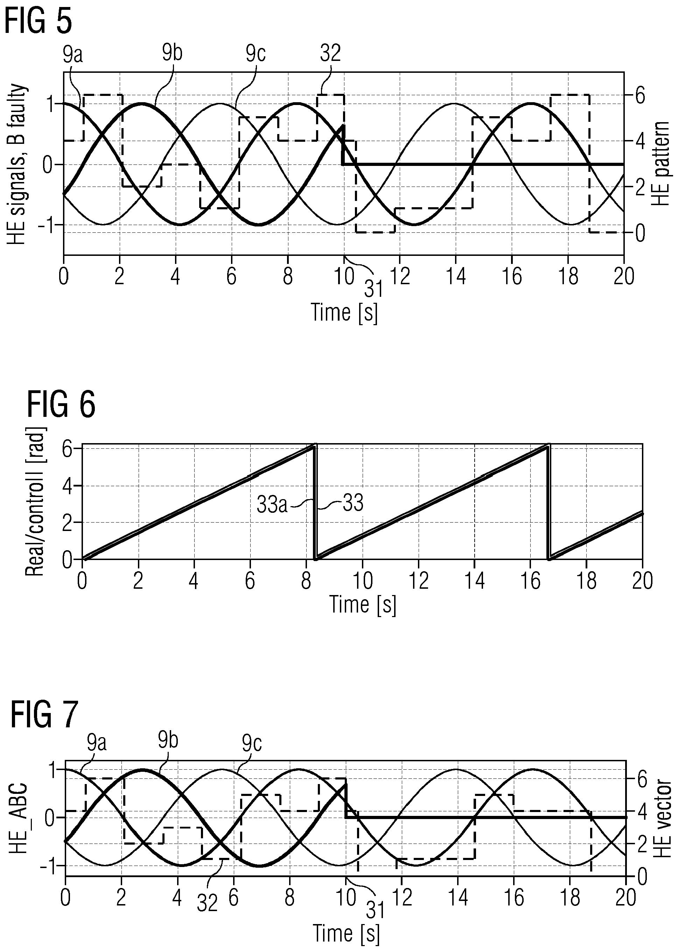

**Figs. 4 and 5** illustrate in coordinates systems having as an abscissa the time and having as an ordinate signal amplitudes, measurement signals 9a, 9b, 9c of three Hall sensors, such as the Hall sensors 10a, 10b, 10c illustrated in Fig. 3 installed at the stator 2. The (reference) curve 30 in Fig. 4 represents a combined state pattern which is calculated by combining the individual state patterns of the measurement signals 9a, 9b, 9c of sensors. The individual state patterns may for example be derived from the analogue measurement signals 9a, 9b, 9c in that a state 1 is assigned to a time span in which the analogue signal is above zero and a state zero is assigned in a time span when the analogue signal is below zero. Fig. 4 illustrates the expected state pattern 30 which is expected, when all sensors are healthy. When the sensors are healthy, the expected state pattern 30 corresponds to the sequence 546231 (the vertical axis on the right-hand side indicates the ordinate indicating the values at the state pattern 30) .

Fig. 5 illustrates a scenario in which the sensor signal 9b of the sensor 10b is deteriorated at and beyond the time instance 31 (for example, short to low fault). The curve 32 indicates the combined state pattern for those three sensors 10a, 10b, 10c, from which the sensor 10b breaks at the time instance 31. It can be appreciated that after the time instance 31 the respective state pattern 32 exhibits an irregularity in that it is different from the expected state pattern 30 as illustrated in Fig. 4. After the time instance 31 the state pattern is of the profile 640 and a fault is detected to have occurred at the time instance 31.

The fault (short to low as an example) occurred while the sensor signal 9b was positive and in this case the fault is detected immediately. In the case that the fault occurs when the sensor signals should be negative, it may take up to 180 electric degree of rotation before the fault is asserted.

According to an embodiment of the present invention, two sensor or three sensor solution is provided with arbitrary phase-shift between installation sites of the sensors. Two Hall sensors may be installed, which may have an angle displacement of 120° as discussed earlier or an arbitrary value δ. The technique of angle calculation based on the orthogonal αβ-signals may still be valid. These αβ-signals may be derived from two sensor measurement values as explained below.

$$\begin{cases} S_1 = V\cos\theta \\ S_2' = V\cos(\theta - \delta) \end{cases}$$

$$\begin{cases} S_\alpha = S_1 \\ S_\beta = \frac{1}{\sin\delta}(S_2' - \cos\delta \cdot S_1) \end{cases}$$

Apparently, if the displacement δ is zero or too small, the mapping won't work.

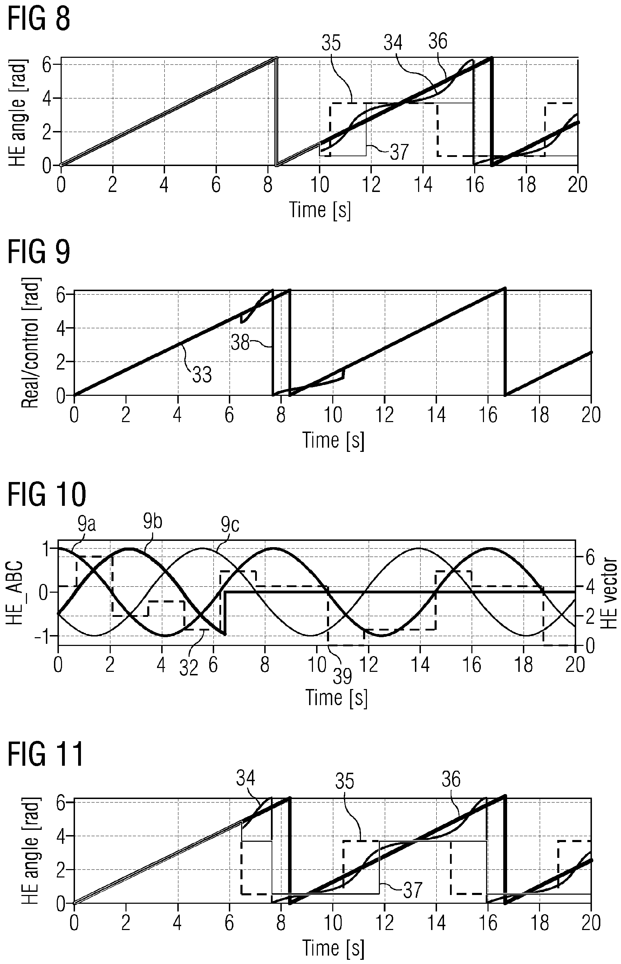

**Figs. 6, 7, 8** illustrate sensor measurement signals and derived signals, when the sensor 10b experiences a fault (short to low for example) when the respective measurement signal is positive and the respective **Figs. 9, 10, 11** illustrate similar signals and derived signals, if the fault occurs in the sensor 10b when the measurement signal is negative.

The curve 33 in Fig. 6 illustrates the real angle. Curve 38 indicates the control angle which is selected from one of the four signals in Fig. 8, based on which the machine is controlled. The fault occurs, as can be appreciated from Fig. 7 at the time instance 31, when the sensor signal 9b of the sensor 10b is positive.

Fig. 8 then illustrates as a curve 34 the electrical angle when the measurement signals 9a, 9b, 9c are used for determination, the curve 35 illustrates the electrical rotor position, if the measurement signals 9a, 9b are used, the curve 36 denotes the electrical rotor position, when the measurement signals 9a, 9c are used and the curve 37 illustrates the rotor positions when the measurement signals 9b, 9c are utilized for determination.

The selection module (e.g. selection module 13 in Fig. 1) may e.g. consider determined angels as derived from different combination of measurement signals, e.g. according to, which are used for determination of curves 34, 35, 36, 37:

$$S_{\alpha\beta} = \begin{cases} f_1(S_A, S_B, S_C) \\ f_2(S_A, S_B) \\ f_3(S_B, S_c) \\ f_4(S_C, S_A) \end{cases}$$

As can be appreciated, according to embodiments of the present invention, the selection module 13 illustrated in Fig. 1 selects the electrical angle from curve 34 when all measurement signals 9a, 9b, 9c are healthy; at the instant of fault occurrence at time 31, the fault is detected immediately, and then only the measurement signals 9a, 9c for angle determination resulting in the curve 36 will be selected as the electrical angle for control which perfectly matches with the real angle 33 illustrated in Fig. 6.

Thus, when the sensor 10b is faulty when the respective measurement signal is positive, then the fault can be identified instantly and the angle for control can be mapped from the three sensor to the two sensor scheme and there would be no error in the angle.

In the scenario as illustrated in Figs. 9, 10, 11 the same sensor fault occurs in the measurement signal 10b, when the respective measurement signal is negative. In Fig. 9 the curve 33 illustrates the real angle and the curve 38 the control angle.

The fault in the second measurement signal 9b occurs at the time instance 31. However, the detection that the state pattern 32 exhibits irregular behaviour is only detected at the time instance 39 being later than the fault occurrence time instance 31. The curves 34, 35, 36, 37 in Fig. 11 illustrate the rotor electrical angle, when either all three measurement signals or the measurement signals 9a, 9b, or the measurement signals 9a, 9c or the measurement signals 9b, 9c are utilized for angle determination, respectively. Thus, in the scenario as illustrated in Figs. 9, 10, 11, the fault occurring at time instance 31 may be detected with a delay and the control angle could have an error within 180° of rotor electrical movement until a detection/correction is made. Prior to the fault being detected, the control angle 38 shall be that selected from curve 34; during the fault detection period from 31 to 39, the curve 34 remains to be used as the control angle 38, but with an angle error; after the fault detection, the selection for control angle 38 is switched to the curve of 36, which is determined from the two healthy sensor measurement signals of 9a, 9c, and carries no error. A maximum control angle error would be about 30°, which is still relatively low to allow continuous operation of machine control.

However, still further improvement is possible for the fault detection and reaction within the maximum of 180° window of rotor movement in electrical angle.

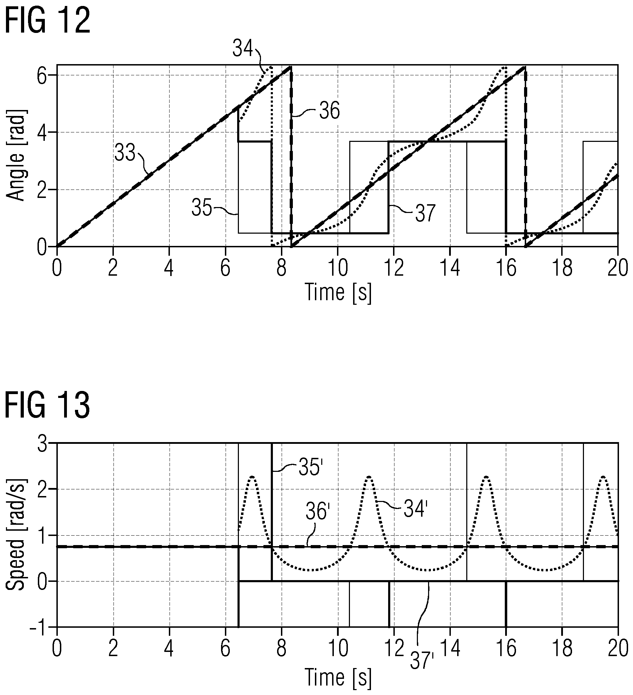

**Figs. 12 and 13** illustrate in coordinate systems having abscissas indicating the time and having coordinates indicating the angle and the speed, respectively, the real rotor position as curve 33, the rotor position calculated using all three measurement signals as a curve 34, using the measurement signals 9a, 9b as curve 35, using the measurement signals 9a, 9c as curve 36 and using the measurement signals 9b, 9c as curve 37. In Fig. 13 the curve 34' indicates the speed using all three measurement signals, the curve 35' indicates the speed using the measurement signals 9a, 9b, the curve 36' indicates the speed using the measurement signals 9a, 9c, and the curve 37' indicates the speed when using the measurement signals 9b, 9c.

Thus, according to embodiments of the present invention, during the period of fault detection, the angle may be calculated by using a filtered speed and this angle will be used for control until the sensor reconfiguration has completed. In other embodiments additionally or alternatively, the control angle may be selected by rationalizing of the four Hall sensor angles formed and one of the simple algorithms is to detect any sudden change in the rate of calculated angles (for example calculated speeds), as illustrated in the Figs. 12, 13.

Once in motion the machine control may be contained even with the use of a single sensor signal, i.e. the system would allow the occurrence of two sensor failures in a three sensor solution or one sensor failure in a two sensor solution. Thus, continuous operation in fault-tolerant mode is provided. This may be simply done by using a 90° phase shifter and then a PLL observer as illustrated in Fig. 2 for capturing the peak value of the signal. For example, given a healthy signal of Sx and its peak value Speak, the angle would be calculated by

$$\theta = \cos^{-1}\frac{S_x}{S_{peak}} + \theta_{offset}$$

The offset angle may be associated with the healthy sensor.

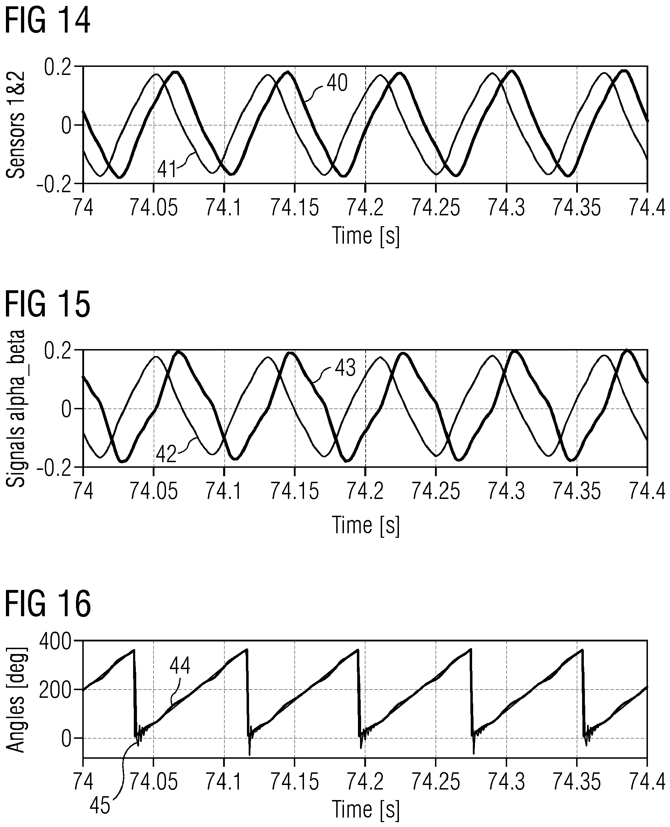

**Figs. 14, 15, 16** illustrated in coordinate systems having abscissas indicating the time and having as ordinates indicating the sensor signals 40 and 41 in Fig. 14, derived orthogonal signals 42 and 43 in Fig. 15, curves in Fig. 16 for angles, with 44 indicating angle determined from the two Hall sensor signals, and 45 indicating EMF observer observed angle.

The determined angle 44 in Fig. 16 is compare with curve 45 indicating an electrical angle as determined by an EMF observer. The curves illustrated in Figs. 14 to 16 are obtained at a power production mode and two sensors are displaced by 60° and installed at the stator. The mapping is occurring from the two sensor signals to the orthogonal αβ-signals. The angle can be calculated by the simple open-loop method.

The calculated angles from the Hall sensors signals 40 and 41 are illustrated as curve 44 in Fig. 16. Although it is noted that there are some ripples in the calculated angles for the Hall sensors this is because the two Hall sensors measurement signals are not yet normalized. But when normalized, the quality may further be improved. Further, harmonic reduction (i.e. that at 6f) may be possible by adopting some existing techniques when the machine is in motion. Similar results as illustrated in Figs. 14 to 16 may be obtained when three Hall sensors are installed with arbitrary phase displacements between them.

Embodiments of the present invention may provide the following embodiments or advantages:

- Application of analogue Hall sensors for wind turbine control for potentially all operational modes, during standstill, low speed and high speed,

- use of sensors that are cheap, avoid moving parts and require no mechanical coupling to the machine shaft and are well suited for the stator and the direct drive generators.

- The analogue Hall sensors provide the absolute electrical angle of a machine and thus is ready for use or control.

- Accommodation of flexible sensor location, which is applicable to the solutions with two or three sensors

- derivation from two or three signal feedbacks with arbitrary phase displacements

- Fault-tolerant operation for a single component failure in the two analogue sensor solution or up to two component failures in the three sensor solution

- A simple technique for fault detection in dynamic selection of control angle

- A technique of angle offset determination from sensor locations without requirement of rotational tests.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

**Claims**

1. Method of determining a rotor electrical angle position (17) of an electrical generator (1a) comprising a stator (2) and a rotor (3) with plural mounted permanent magnets (4), in particular of a wind turbine, the method comprising:

   allowing to receive and/or receiving at least a time dependent measurement signals (9a,b,c) from a first analogue Hall sensor (10a), a second analogue Hall sensor (10b), and optionally a third analogue Hall sensor (10c), the Hall sensors being mounted at different circumferential positions at the stator (2) to detect magnetic flux at least partly due to one or more of the permanent magnets;
   evaluating received measurement signals (9a, b,c);
   selecting at least one measurement signal based on the evaluation, in order to in particular exclude a measurement signal of any faulty sensor;
   determining the electrical angle position (17a, 17) based on the at least one selected measurement signal.

2. Method according to the preceding claim, wherein evaluating received measurement signals (9a,b,c) comprises:

   for each sensor (10a,b,c), digitizing the received measurement signal, in order to derive a time dependent individual state pattern, in particular binary state pattern;
   evaluating the digitized measurement signals, in particular in a combined manner, in order to select at least one non-faulty sensor and/or deselect at least one faulty sensor.

3. Method according to the preceding claim, wherein evaluating the digitized measurement signals comprises:

   combining two or more of the individual state patterns, to create one combined state pattern (32) associated with the corresponding group of sensors;
   for the combined state pattern:

   evaluating the combined state pattern (32) to detect a time instance (31) beyond which an irregularity or unexpected behaviour occurs;
   indicating a fault;

   wherein an irregularity is in particular detected, if at least one of the following holds:

   a deviation of the combined state pattern from an expected state pattern (30) exceeds a threshold;
   a temporal change of the state pattern exceeds a threshold.

4. Method according to the preceding claim, wherein evaluating the combined state pattern (32) comprises:

   comparing the combined state pattern with a predetermined reference state pattern (30) for a functional set of sensors to determine a deviation;
   detecting a fault depending on the deviation; and/or
   switching the selection based on the deviation, or result of fault detection.

5. Method according to one of the preceding claims 3 or 4, wherein a considered sensor is identified as faulty, if all combined state patterns associated with a group of sensors containing the considered sensor exhibit an irregularity, wherein the measurement signal of the faulty sensor is deselected.

6. Method according to one of the preceding claims, wherein evaluating the analogue measurement signals comprises:

   forming several measurement signal groups each containing one or more measurement signals originating from one or more sensors;
   for each measurement signal group, determining the rotor position and/or rate of change of the rotor position using the one or more measurement signals, as group rotor position (34, 35, 36, 37) and/or as group rotor speed (34', 35', 36', 37');
   assessing group rotor positions and/or as group rotor speeds for at least one irregularity and/or unexpected behaviour, in order to select at least one measurement signal associated with at least one sensor;

determining rotor position and/or rate of change of the rotor position based on the selected at least one measurement signal.

7. Method according to the preceding claim, wherein evaluating the analogue measurement signals comprises:

mutually comparing a time course of the several group rotor positions (34, 35, 36, 37) and/or group rotor speeds (34', 35', 36', 37');
deselecting those one or more sensors for which in each associated group an irregularity and/or unexpected behaviour is observed;
determining rotor position and/or rate of change of the rotor position based on the non-deselected at least one measurement signal.

8. Method according to one of the preceding claims, comprising, upon detection of a fault in one sensor:

dynamically switching the selected one or more measurement signal, to not include the faulty sensor measurement signal;
determining the rotor position based on the switched selected one or more measurement signal.

9. Method according to one of the preceding claims,

wherein three sensors (10a,b,c) are installed, wherein zero or one or two sensors are or become faulty, or
wherein two sensors (10a,b) are installed, wherein zero or one sensor is or become faulty, and/or
wherein the Hall sensors are mounted at the stator at arbitrary different circumferential positions, in particular spaced apart by electrical angle of 90° or 120° or a value different from substantially 90° or 120°.

10. Method according to one of the preceding claims, wherein determining the electrical angle position comprises:

determining orthogonal signals (S_alpha, S_beta) from selected measurement signals of two or three or more sensors, in particular utilizing an angle offset of mounting sites of the two sensors;
determining the electrical angle position from the two orthogonal signals.

11. Method according to one of the preceding claims, wherein at least one of the following holds:

determining the electrical angle position comprises normalizing selected measurement signals;
determining the electrical angle position using employing open loop or closed loop;
determining the electrical angle position comprises to determine and to add an angle offset, in particular based on stator segment type and/or stator tooth used for mounting the sensor and/or mounting location and/or sensor location within air duct.

12. Method of controlling an electrical generator (1a) comprising a stator (2) and a rotor (3) with plural mounted permanent magnets (4), in particular of a wind turbine, comprising:

performing a method of determining a rotor electrical angle position (17) of the electrical generator according to one of the preceding claims;
controlling the permanent magnet generator (1a) based on the determined rotor electrical angle position (17).

13. Method according to the preceding claim, performed during at least one of:

during starting;
during normal operation at partial or full load for producing electrical power;
during standstill;
during maintenance involving rotor movement.

14. Arrangement (7) for determining a rotor electrical angle position of an electrical generator comprising a stator and a rotor with plural mounted permanent magnets, in particular of a wind turbine, the arrangement comprising:

an input portion (8) adapted to allow to receive and/or receive time dependent measurement signals (9a,b,c) from a first and a second analogue Hall sensor (10a,b) mounted at different circumferential positions at the stator (2) to detect magnetic flux at least partly due to one or more of the permanent magnets;
a processor (11) coupled to the input portion and adapted:

to evaluate received measurement signals (9a,b,c);
to select at least one measurement signal based on the evaluation, in order to exclude a measurement signal of any faulty sensor;
to determine the electrical angle position (17)

based on the at least one selected measurement signal, the arrangement in particular being further adapted to control the permanent magnet generator based on the determined rotor electrical angle position;

the arrangement in particular comprising the first and the second Hall sensor.

15. Electrical generator system (1), in particular of a wind turbine, comprising:

a stator (2);
a rotor (3) with plural mounted permanent magnets (4);
an arrangement (7) according to the preceding claim, connected to control the generator.

FIG 1

FIG 2

## FIG 3

## FIG 4

# FIG 5

# FIG 6

# FIG 7

FIG 8

FIG 9

FIG 10

FIG 11

## FIG 12

## FIG 13

## FIG 14

## FIG 15

## FIG 16

Europäisches
Patentamt

European
Patent Office

Office européen
des brevets

# EUROPEAN SEARCH REPORT

**Application Number**

EP 23 17 1757

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2006/051590 A1 (HITACHI LTD [JP]; SAITOU HIROYUKI [JP]) 18 May 2006 (2006-05-18) | 1,2,6-15 | INV. G01D3/08 G01D5/14 |
| A | * figures 1-10 * * paragraphs [0010], [0022] - [0025] * | 3-5 | |
| A | US 2019/250059 A1 (POPESCU-STROE VICTOR [RO] ET AL) 15 August 2019 (2019-08-15) * figure 1 * * paragraphs [0109] - [0111] * * claims 1, 13 * | 1-15 | |
| A | EP 3 578 928 A1 (AMS AG [AT]) 11 December 2019 (2019-12-11) * figures 1, 2 * * paragraph [0036] * | 1-15 | |
| A | EP 3 393 037 A1 (NIDEC CORP [JP]) 24 October 2018 (2018-10-24) * figures 1, 10, 16 * * paragraphs [0144], [0157], [0266] * | 1-15 | |

**TECHNICAL FIELDS SEARCHED (IPC)**

G01D

The present search report has been drawn up for all claims

| Place of search | Date of completion of the search | Examiner |
|---|---|---|
| Munich | 20 October 2023 | Kuchenbecker, J |

EPO FORM 1503 03.82 (P04C01)

## ANNEX TO THE EUROPEAN SEARCH REPORT
## ON EUROPEAN PATENT APPLICATION NO.

EP 23 17 1757

This annex lists the patent family members relating to the patent documents cited in the above-mentioned European search report.
The members are as contained in the European Patent Office EDP file on
The European Patent Office is in no way liable for these particulars which are merely given for the purpose of information.

20-10-2023

| Patent document cited in search report | | | Publication date | Patent family member(s) | | | Publication date |
|---|---|---|---|---|---|---|---|
| WO 2006051590 | A1 | | 18-05-2006 | JP | WO2006051590 | A1 | 29-05-2008 |
| | | | | WO | 2006051590 | A1 | 18-05-2006 |
| US 2019250059 | A1 | | 15-08-2019 | CN | 110132316 | A | 16-08-2019 |
| | | | | DE | 102018102998 | A1 | 14-08-2019 |
| | | | | US | 2019250059 | A1 | 15-08-2019 |
| EP 3578928 | A1 | | 11-12-2019 | CN | 112543860 | A | 23-03-2021 |
| | | | | EP | 3578928 | A1 | 11-12-2019 |
| | | | | US | 2021172763 | A1 | 10-06-2021 |
| | | | | WO | 2019233730 | A1 | 12-12-2019 |
| EP 3393037 | A1 | | 24-10-2018 | BR | 112017013581 | A2 | 16-06-2020 |
| | | | | CN | 107148741 | A | 08-09-2017 |
| | | | | CN | 111245306 | A | 05-06-2020 |
| | | | | CN | 111293929 | A | 16-06-2020 |
| | | | | EP | 3240182 | A1 | 01-11-2017 |
| | | | | EP | 3393037 | A1 | 24-10-2018 |
| | | | | JP | 6233532 | B2 | 22-11-2017 |
| | | | | JP | 6575581 | B2 | 18-09-2019 |
| | | | | JP | 6575582 | B2 | 18-09-2019 |
| | | | | JP | 6589961 | B2 | 16-10-2019 |
| | | | | JP | 6597748 | B2 | 30-10-2019 |
| | | | | JP | 6888659 | B2 | 16-06-2021 |
| | | | | JP | 2018029469 | A | 22-02-2018 |
| | | | | JP | 2018029470 | A | 22-02-2018 |
| | | | | JP | 2018029471 | A | 22-02-2018 |
| | | | | JP | 2018029472 | A | 22-02-2018 |
| | | | | JP | 2020018168 | A | 30-01-2020 |
| | | | | JP | WO2016104378 | A1 | 07-09-2017 |
| | | | | KR | 20170090463 | A | 07-08-2017 |
| | | | | KR | 20190002756 | A | 08-01-2019 |
| | | | | RU | 2663224 | C1 | 02-08-2018 |
| | | | | US | 2017343382 | A1 | 30-11-2017 |
| | | | | US | 2021180989 | A1 | 17-06-2021 |
| | | | | US | 2021180990 | A1 | 17-06-2021 |
| | | | | WO | 2016104378 | A1 | 30-06-2016 |
| | | | | WO | 2017104674 | A1 | 22-06-2017 |

EPO FORM P0459

For more details about this annex : see Official Journal of the European Patent Office, No. 12/82